# EUROPEAN PATENT APPLICATION

(11) **EP 2 884 094 A2**
(43) Date of publication of application: **17.06.2015**
(21) Application number: 14185682.3
(22) Date of filing: 22.09.2014
(51) Int. Cl.: F02N 11/08

(54) **Control device for internal combustion engine**

(30) Priority: 22.11.2013 JP 2013242174
(71) Applicant: Toyota Jidosha Kabushiki Kaisha, Toyota-shi, Aichi-ken 471-8571 (JP)
(72) Inventor: Hirai, Takuya, AICHI-KEN, 471-8571 (JP)
(74) Representative: Intès, Didier Gérard André

(57) **Abstract**

A control device for an internal combustion engine capable of perfonning automatic stop control using heat generation by glow plug energization is provided. An ECU executes an estimation program of a deposit accumulation amount. The ECU executes a determination processing of determining whether or not automatic stop conditions are established. The automatic stop conditions include whether or not a cooling water temperature of an engine reaches a threshold temperature as one of the conditions. It is determined whether a present operation condition belongs to an automatic stop control prohibition region or an automatic stop control implementation region, based on the deposit accumulation amount and the engine cooling water temperature. The ECU starts automatic stop control processing when the automatic stop conditions are determined to be established, and the ECU executes processing of starting energizing a glow plug section.

## Description

### Background of The Invention

### Field of the Invention

The present invention relates to a control device for an internal combustion engine.

### Background Art

There has been conventionally known a control device for an internal combustion engine that can bum and remove deposits that accumulate in an oxygen sensor as is disclosed in Japanese Patent Laid-Open No. 2003-278594, for example. In Japanese Patent Laid-Open No. 2003-278594, the temperature of the oxygen sensor is raised during idling stop of the internal combustion engine, and thereby, the temperature of the oxygen sensor can be raised under the situation in which the oxygen sensor is difficult to cool by a gas flow. As a result, the temperature of the oxygen sensor can be raised while the electric power consumption is saved.

Other prior art includes Japanese Patent-Laid Open No. 2011-074809.

An internal combustion engine loaded on a vehicle may perform automatic stop such as idling stop or free run when predetermined conditions are established. Free run means traveling by inertia without transmitting a drive force and a decelerating force to drive wheels. In general, when automatic stop is executed in an internal combustion engine, a cooling water temperature and an oil temperature of the internal combustion engine are included as the automatic stop conditions. Under a low-temperature environment in which the cooling water temperature and the oil temperature of the internal combustion engine do not exceed a predetermined threshold value, automatic stop is not executed. Conventionally, it has been general to determine whether automatic stop is proper or improper by using uniform threshold values.

Accumulation of deposits becomes a problem in a glow plug. When the accumulating deposits are to be burned and removed by energizing a glow plug, it is conceivable to perform the energization during the automatic stop described above. This can raise the temperature of the glow plug under the situation in which the glow plug is difficult to cool by a gas flow. As a result, the deposits can be removed while electric power consumption is saved.

When the glow plug is energized, the ambient temperature in the cylinder rises. The rise in the ambient temperature enhances restartability from automatic stop. Namely, if the glow plug is energized during automatic stop, the environment capable of executing automatic stop and restart can be created even if the engine cooling water temperature or the like is low. Conventionally, attention has not been paid to the physical phenomenon like this, and there has been the problem of wasting the chance of performing automatic stop of an internal combustion engine.

### Summary of the Invention

The present invention is made to solve the problem as described above, and has an object to provide a control device for an internal combustion engine that can perform automatic stop control using heat generation by energizing a glow plug.

According to a first aspect of the present invention, a control device for an internal combustion engine includes: determination means for determining whether or not an automatic stop condition is established, the automatic stop condition including a condition that a cooling water temperature or an oil temperature of the internal combustion engine is equal to or larger than a threshold temperature; automatic stop means for executing an automatic stop control that stops the internal combustion engine, when it is determined that the automatic stop condition is established; first energization means for energizing a glow plug provided with the internal combustion engine so as to remove a deposit of the glow plug while the internal combustion engine is automatically stopped; and setting means for setting the threshold temperature such that the threshold temperature is made lower as a deposit accumulation amount of the glow plug is greater.

According to a second aspect of the present invention, in the control device according to the first aspect, the setting means may set the threshold temperature such that the threshold temperature is set at a first temperature when the deposit accumulation amount is a first accumulation amount, and the threshold temperature is set to be a second temperature lower than the first temperature when the deposit accumulation amount is a second accumulation amount that is higher than the first accumulation amount, and the threshold temperature is made lower from the first temperature to the second temperature as the deposit accumulation amount is larger between the first accumulation amount and the second accumulation amount.

According to a third aspect of the present invention, in the control device according to the second aspect, the setting means may set the threshold temperature such that, when the deposit accumulation amount is larger than the second accumulation amount, the threshold temperature is kept at the second temperature.

According to a fourth aspect of the present invention, in the control device according to the second or third aspect, the setting means may set the threshold temperature such that, when the deposit accumulation amount is lower than the first accumulation amount,, the threshold temperature is kept at the first temperature.

According to a fifth aspect of the present invention, the control device according to any one of the first to fourth aspects, may further include second energization means for energizing the glow plug so as to remove a deposit of the glow plug during an operation of the internal combustion engine. In the fifth aspect, the control device may remove the deposit of the glow plug by the first energizing means and the second energizing means when the deposit accumulation amount is a third accumulation amount, and the control device may remove the deposit of the glow plug by the first energizing means and the second energizing means is not used to remove the deposit, when the deposit accumulation amount is a fourth accumulation amount lower than the third accumulation amount.

According to a sixth aspect of the present invention, the control device according to the fifth aspect, may further include: battery detecting means for detecting a charge state of a battery, the battery supplying electric power to starting means of the internal combustion engine; and power generation means for generating electric power by using a drive force of the internal combustion engine. In the sixth aspect, the first energization means may energize the glow plug with the power generation means generating the electric power when the charge state detected by the battery detecting means is a first state, and the first energization means may energize the glow plug, when the charge state detected by the battery detecting means is a second state higher than the first state, regardless of whether the power generation means generates the electric power.

According to a seventh aspect of the present invention, in the control device according to the sixth aspect, a charge threshold value may be set to be compared with the charge state detected by the battery detecting means, the control device may determine the first state when the charge state is equal to or lower than the charge threshold value, the control device determines the second state when the charge state is higher than the charge threshold value, and the charge threshold value may be set at a larger value as the deposit accumulation amount is higher.

According to an eighth aspect of the present invention, the control device according to any one of the first to fourth aspects, may further include: battery detecting means for detecting a charge state of a battery, the battery supplying electric power to starting means of the internal combustion engine; power generation means for generating electric power by using a drive force of the internal combustion engine; second energization means for energizing the glow plug so as to remove a deposit of the glow plug during an operation of the internal combustion engine; and battery control selecting means for setting a condition to allow the first energization means and the second energization means to energize the glow plug in accordance with the deposit accumulation amount and the charge state detected by the battery detecting means. In the eighth aspect, the battery control selecting means may include a charge threshold value to be compared with the charge state detected by the battery detecting means; the battery control selecting means may cause the first energization means and the second energization means to energize the glow plug with the power generation means generating the electric power, when the charge state detected by the battery detecting means is equal to or lower than the charge threshold value; the battery control selecting means may cause the first energization means and the second energization means to energize the glow plug, when the charge state detected by the battery detecting means is higher than the charge threshold value and the deposit accumulation amount is greater than a predetermined accumulation amount; and the battery control selecting means may cause the first energization means only out of the first energization means and the second energization means to energize the glow plug, when the charge state detected by the battery detecting means is higher than the charge threshold value and the deposit accumulation amount is equal to or smaller than the predetermined accumulation amount.

According to a ninth aspect of the present invention, in the control device according to the eighth aspect, the charge charge threshold value may be made greater as the deposit accumulation amount is greater.

According to a tenth aspect of the present invention, in the control device according to any one of the first to ninth aspect, the internal combustion engine may be connected to regeneration means for charging a battery by a regenerative electric power that is generated at a time of deceleration of the internal combustion engine. The control device according to the tenth aspect may further include battery detecting means for detecting a charge state of a battery, the battery supplying electric power to starting means of the internal combustion engine. In the tenth aspect, the first energization means may energize the glow plug by using the regenerative electric power of the regeneration means when the charge state is equal to or larger than a predetermined value.

According to an eleventh aspect of the present invention, in the control device according to the tenth aspect, the predetermined value may be a high degree of a charge state such an extent that the battery is not charged by the regenerative electric power.

According to a twelfth aspect of the present invention, in the control device according to any one of the first to eleventh aspects, the glow plug may be integrated with an in-cylinder pressure sensor.

According to a thirteenth aspect of the present invention, the control device according to any one of the first to twelfth aspects, the control device may further include estimation means for estimating the deposit accumulation amount of the glow plug.

According to the first aspect of the present invention, the threshold temperature is set to be variable in response to the deposit accumulation amount, and therefore, automatic stop control can be easily executed by using heat generation by glow plug energization.

According to the second aspect of the present invention, both the deposit accumulation amount and the threshold temperature are caused to be correlated so that the threshold temperature is increased in response to increase in the deposit accumulation amount, and therefore, the threshold temperature can be set more minutely and properly.

According to the third aspect of the present invention, reduction of the threshold temperature is limited up to the second temperature, whereby the situation can be restrained, in which automatic stop control is performed even though the engine cooling water temperature or the oil temperature is too low even if heat generation by glow plug energization is added.

According to the fourth aspect of the present invention, only when there is a certain degree of deposit accumulation amount or more, the threshold temperature is changed, and the automatic stop control can be made easily executable. On the other hand, when the deposit accumulation amount is small, the threshold temperature can be kept at a constant value.

According to the fifth aspect of the present invention, when the deposit accumulation amount is large, the glow plug is energized not only during automatic stop of the internal combustion engine but also during an operation of the internal combustion engine, and thereby the deposits can be removed.

According to the seventh aspect of the present invention, as the deposit accumulation amount is larger, the electric power with which the glow plug has to be energized to remove deposits becomes larger, and therefore, the charge threshold value for determining the battery charge state can be made proper in keeping with the tendency.

According to the eighth aspect of the present invention, three kinds of energization conditions can be properly used in accordance with the estimated deposit accumulation amount and the detected charge state.

According to the ninth aspect of the present invention, as the deposit accumulation amount is larger, the electric power with which the glow plug has to be energized to remove deposits becomes larger, and therefore, the charge threshold value for determining the battery charge state can be made proper in keeping with the tendency.

According to the tenth aspect of the present invention, when the charge of the battery is sufficient, the regenerative electric power can be effectively used in energizing the glow plug.

According to the eleventh aspect of the present invention, the regenerative electric power is used in glow plug energization, whereby the situation in which the regenerative electric power cannot be charged into the battery and is discarded can be prevented.

According to the twelfth aspect of the present invention, when the deposits accumulate so much that measurement with the in-cylinder pressure sensor becomes difficult, the deposits can be removed by energizing the glow plug.

According to the thirteenth aspect of the present invention, the deposit accumulation amount necessary for the first to the twelfth aspect of the present inventions can be estimated by using the means for estimating the deposit accumulation amount.

### Brief Description of the Drawings

Fig. 1 is a block diagram showing a control device of an internal combustion engine according to a first embodiment of the present invention;
Figs. 2A and 2B are graphs showing a relation of a glow plug temperature and glow plug power consumption in the first embodiment of the present invention;
Fig. 3 is a timing chart showing an operation of the control device for the engine according to the first embodiment of the present invention;
Fig. 4 is a map that is stored by the control device of the engine according to the first embodiment of the present invention;
Fig. 5 is a flowchart of a routine executed by the control device of the engine according to the first embodiment of the present invention;
Fig. 6 is a map that is stored by a control device of the internal combustion engine according to the second embodiment of the present invention;
Fig. 7 is a diagram showing a flowchart of a routine executed by the control device for an internal combustion engine according to the second embodiment of the present invention;
Fig. 8 is a map that is stored by a control device for an internal combustion engine according to the third embodiment of the present invention; and
Fig. 9 is a diagram showing a flowchart of a routine that is executed by the control device for an internal combustion engine according to the third embodiment of the present invention.

### Detailed Description of the Preferred embodiments

### First Embodiment

### [Configuration of Device of First Embodiment]

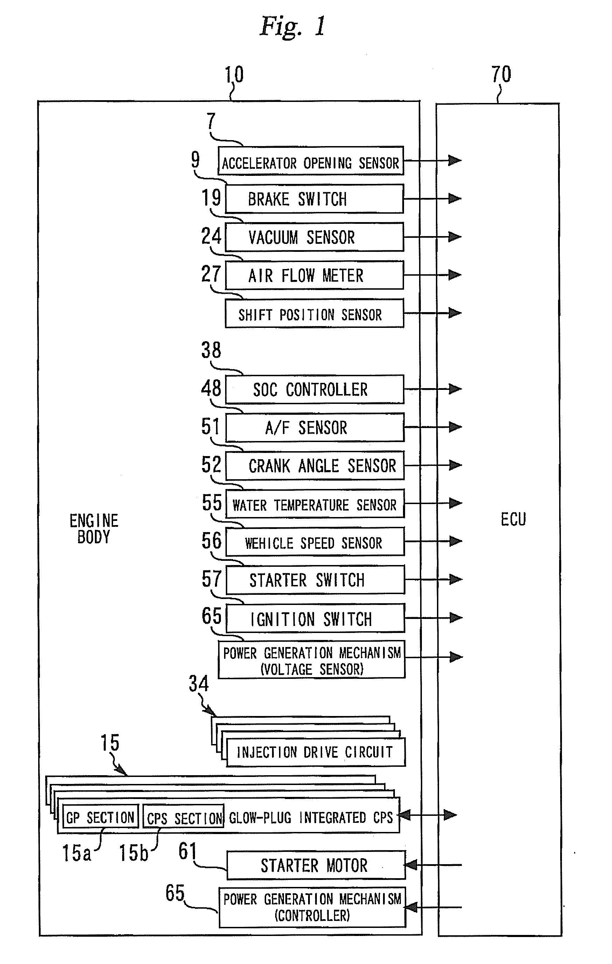

Fig. 1 is a block diagram showing a control device of an internal combustion engine according to a first embodiment of the present invention. An internal combustion engine 10 of the present embodiment (hereinafter, also simply called an engine 10) is a four-cycle diesel engine having a plurality of cylinders. In the block diagram of Fig. 1, illustration of a structure of the engine 10 is omitted. Further, the engine 10 is loaded on a vehicle not illustrated, and serves as a power source of the vehicle.

The engine according to the present embodiment includes an engine main body in which the plurality of cylinders are formed. Though details are not illustrated, the engine main body includes a cylinder block and a cylinder head that configure the plurality of cylinders.

The engine 10 contains a plurality of pistons that form combustion chambers in the plurality of cylinders, and a crankshaft to which the plurality of pistons are connected via connecting rods, though they are not illustrated. Further, the engine 10 includes intake valves and exhaust valves that open and close at upper portion sides of the combustion chambers, and a valve gear that causes the intake valves and the exhaust valves to perform opening and closing operations in response to stroke positions of the pistons accompanying rotation of the crankshaft.

The engine 10 includes glow-plug-integrated type in-cylinder pressure sensors 15 that are provided to face the insides of the combustion chambers. The glow-plug-integrated type in-cylinder pressure sensors 15 each includes a glow plug section 15a and an in-cylinder pressure sensor section 15b.

At one side in a short side direction of the cylinder head of the engine 10, a plurality of intake ports (no reference signs) corresponding to the plurality of cylinders are formed, and the intake valves are provided at inner end sides of the respective intake ports. A plurality of intake branch tubes corresponding to the plurality of intake ports and a surge tank to which the intake branch tubes are connected communicate with the cylinder head of the engine 10, so that at the opening time of the respective intake valves, air and a mixture gas as fuel can be taken (sucked) into the combustion chambers corresponding to the intake valves. To an intake pipe, an air flow meter 24 that measures a flow rate QA of air is fitted. A pressure PI in the surge tank is detected by a vacuum sensor 19.

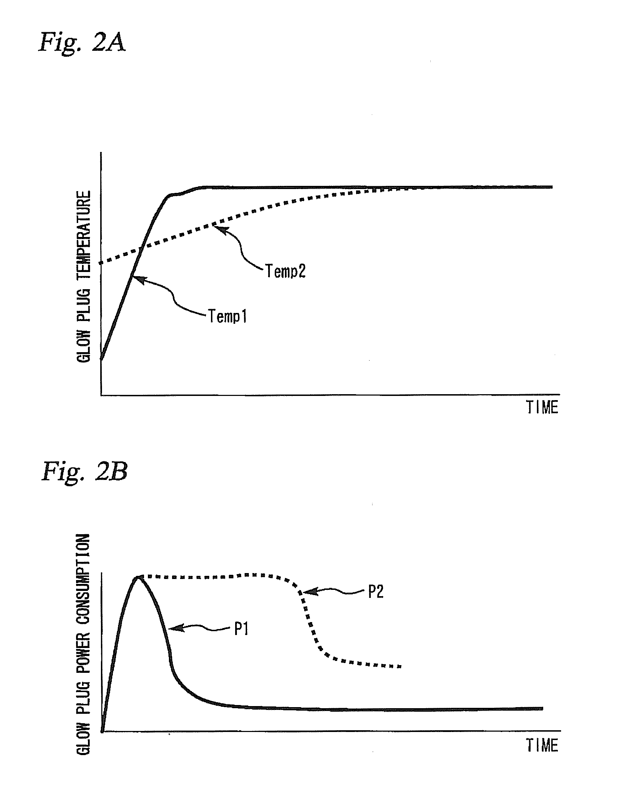

A plurality of injectors (fuel injection valves) for in-cylinder direct injection are fitted to the cylinder head of the engine 10. The plurality of injectors are driven to open during predetermined fuel injection time periods at the respective corresponding cylinders by injection drive circuits 34 (see Fig. 2) corresponding to the respective injectors.

An exhaust manifold and an exhaust pipe downstream thereof communicate with the other side in the short side direction of the cylinder head of the engine 10 so that an exhaust gas can be discharged from the corresponding combustion chambers at the valve opening times of the respective exhaust valves. To the exhaust pipe, a catalyst that has a function of purifying the exhaust gas of the engine 10, and an air-fuel ratio sensor 48 that is known to the public and detects an exhaust air-fuel ratio are fitted to the exhaust pipe.

Meanwhile, a crank angle sensor 51 that outputs a pulse signal CA each time a crankshaft not illustrated rotates a predetermined angle (for example, 10°), and a water temperature sensor 52 that outputs an electric signal TW corresponding to the cooling water temperature of the engine 10 are attached to the engine 10.

Further, a starter motor 61 is attached in a vicinity of a connecting portion of the engine 10 and a clutch mechanism. The starter motor 61 has a function of rotationally operating a flywheel with use a battery as an energy source at a starting time of the engine 10, and cranking the engine 10.

A power generation mechanism 65 that is connected to a distal end portion of the crankshaft via a crank pulley and a belt not illustrated is further attached to the engine 10. The power generation mechanism 65 is constituted of an alternator, a regulator, a controller and the like, for example.

The engine 10 which is configured as above is electronically controlled by an ECU 70 that is an electronic control unit for engine control. The ECU 70 is the control device according to the first embodiment of the present invention.

In addition to an accelerator opening sensor 7, a brake switch 9 that detects an operation/non-operation of a brake pedal, a shift position sensor 27 that detects an operation position of a shift lever that is installed in a vehicle interior, the vacuum sensor 19, the air flow meter 24, the air-fuel ratio sensor 48, the crank angle sensor 51, the water temperature sensor 52 and a voltage detection section (no reference sign) of the power generation mechanism 65, various sensors such as a vehicle speed sensor 55 that detects a traveling speed of the vehicle, and a SOC controller 38 that calculates a charge state (State Of Charge) of the battery from the integration value of a discharge current amount and a charge current amount of the battery included in the engine 10 are connected to the ECU 70 by wiring, and output signals of the various sensors are taken into the ECU 70. Further, on/off signals of the starter switch 56 and on/off signals of the ignition switch 57 are inputted into the ECU 70.

The ECU 70 is connected to the glow-plug-integrated type in-cylinder pressure sensors 15. Thereby, the ECU 70 controls on/off of energization to the glow plug sections 15a, and can detect the in-cylinder pressures of the respective cylinders by receiving output signals from the in-cylinder pressure sensor section 15b.

The injection drive circuits 34 that drive the injectors, and the starter motor 61 and the power generation mechanism 65 which are described above are respectively connected to the ECU 70 by wiring. The ECU 70 has a function of outputting control signals to the injection drive circuits 34, the starter motor 61, the power generation mechanism 65 or the like with the output signals from the various sensors as parameters.

The ECU 70 operates in accordance with an application program stored in an internal memory, and has a function of executing fuel injection control and the like with the output signals from the various sensors as parameters, and executing automatic stop control according to the present embodiment. The automatic stop control according to the present embodiment is idling stop control.

The internal memory of the ECU 70 stores processing of determining whether execution of automatic stop control is proper or improper (namely, determination processing of whether idling stop is proper or improper), control programs for performing selective execution of the automatic stop control corresponding to the determination result and the like. Further, the internal memory memorizes and stores processing conditions, determination conditions and the like that are used in the control programs. The automatic stop control program stored in the internal memory of the ECU 70 determines whether or not automatic stop conditions set in advance are established (established or not) at each predetermined time period. If the automatic stop conditions are established, execution of automatic stop control (namely, automatic stop processing that is automatically restartable) is allowed.

The internal memory of the ECU 70 also stores an estimation program for estimating a deposit accumulation amount of the glow-plug-integrated type in-cylinder pressure sensor 15. The estimation program may be the program which estimates the deposit accumulation amount by measuring the temperature of the in-cylinder pressure sensor section 15b as is described in Japanese Patent Laid-Open No. 2008-19287, for example. Alternatively, the deposit accumulation amount may be estimated in response to a degree of reduction of a pressure detected by the in-cylinder pressure sensor section 15b. Note that various deposit estimation techniques known to the public and other than these techniques may be applied.

### [Operation of Device of First Embodiment]

Figs. 2A and 2B are graphs showing a relation of a glow plug temperature and glow plug power consumption in the first embodiment of the present invention. Temperature characteristics Temp1 and Temp2 shown in Fig. 2A each shows a state in which the glow plug temperature at the time of energizing the glow plug section 15a rises with a lapse of time. The temperature characteristic Temp1 in a solid line is the characteristic at the time of energizing the glow plug section 15a during stop of the engine 10, and the temperature characteristic Temp2 in the broken line is the characteristic at the time of energizing the glow plug section 15a during an operation of the engine 10, respectively.

Power consumption characteristics P1 and P2 shown in Fig. 2B each shows a state in which the power consumption characteristic of the glow plug section 15a changes with a lapse of time. The power consumption characteristic P1 in the solid line is a characteristic at a time of energizing the glow plug section 15a during stop of the engine, and the power consumption characteristic P2 in the broken line is a characteristic at a time of energizing the glow plug section 15a during an engine operation.

In the present embodiment, the ECU 70 can execute "first energizing control" that energizes the glow plug section 15a to remove deposits in the glow-plug-integrated type in-cylinder pressure sensor 15 during automatic stop of the engine 10. According to the first energizing control, the glow plug section 15a can be operated in accordance with the temperature characteristic Temp1 and the power consumption characteristic P1 described above.

Since during automatic stop of the engine 10, the crankshaft stands still and there is no up-and-down movement of the piston, there is no gas flow in the cylinder. When the glow plug section 15a is energized under the environment without a gas flow, the glow plug temperature can be raised in a short time period as shown in Fig. 2A. Therefore, as shown in Fig. 2B, deposits can be removed with low power consumption in a short time period. Further, by energizing the glow plug section 15a during automatic stop of the engine 10, favorable combustion is enabled when the engine 10 is restarted.

Note that the ECU 70 also can execute "second energizing control" that energizes the glow plug section 15a so as to remove deposits in the glow-plug-integrated type in-cylinder pressure sensor 15 during an operation of the engine 10. According to the second energizing control, the glow plug section 15a can be operated in accordance with the temperature characteristic Temp2 and the power consumption characteristic P2 described above.

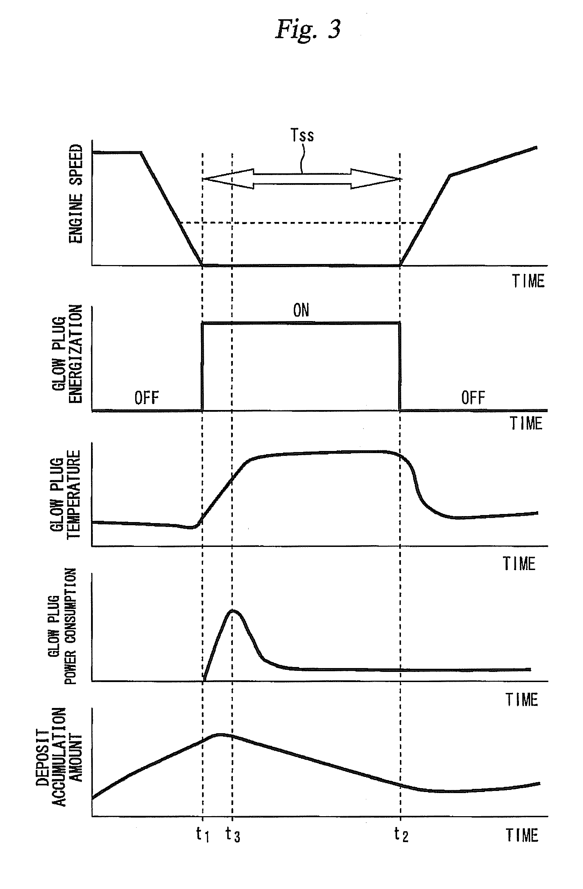

Fig. 3 is a timing chart showing an operation of the control device for the engine 10 according to the first embodiment of the present invention. A time period Tss until a time t2 from a time t1 corresponds to a time period during automatic stop of the engine 10, in which glow plug energization is on. Thereafter, with rise of the glow plug temperature, the deposit accumulation amount also reduces. With respect to reduction of the deposit accumulation amount, the glow plug power consumption has a peak at a time t3, after which, the power consumption quickly reduces, and thereafter enters a time period with low power consumption.

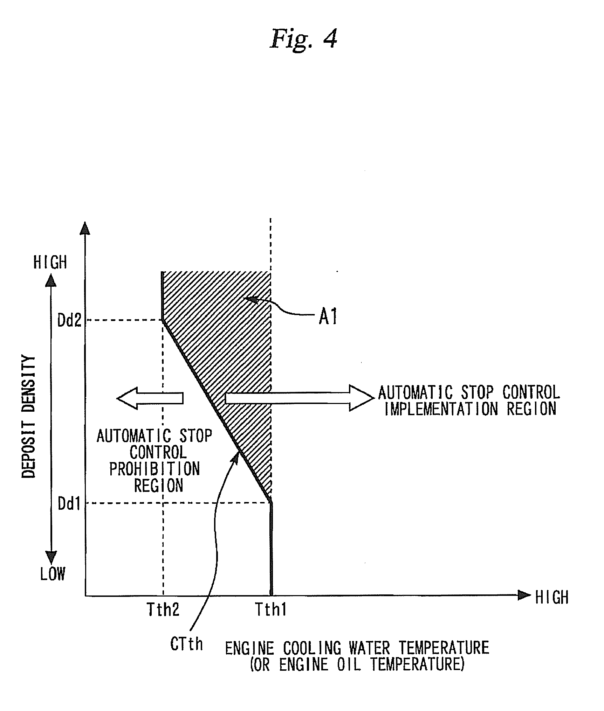

Fig. 4 is a map that is stored by the control device of the engine 10 according to the first embodiment of the present invention. In the first embodiment, in a two-dimensional map in which an engine cooling water temperature THW and a deposit density are used as variables, an automatic stop control implementation region and an automatic stop control prohibition region which are divided by a threshold temperature CTth are set. The threshold temperature CTth refers to a temperature to be a threshold value for implementing automatic stop control. When the present engine cooling water temperature is lower than the threshold temperature CTth, automatic stop control is not performed.

A deposit density Dd is a value that has a positive correlation with an accumulation amount estimated in the estimation program of a deposit deposition amount described above. The deposit accumulation amount is a value showing whether the amount of the deposit accumulating in the glow-plug-integrated type in-cylinder pressure sensor 15 is large or small. In contrast with this, the deposit density Dd shows a degree of the deposit covering a surface of the glow-plug-integrated type in-cylinder pressure sensor 15. The deposit density can be set to be 100% when the surface exposed in the combustion chamber in the glow-plug-integrated type in-cylinder pressure sensor 15 is completely covered with deposit, while the state without deposit is set as 0%, for example.

In the map shown in Fig. 4, the threshold temperature is set at a first temperature Tth1 when the deposit density Dd is a first density Dd1, and the threshold temperature is set to be a second temperature Tth2 lower than the first temperature Tth1 when the deposit density Dd is a second density Dd2 that is higher than the first density Dd1. Furthermore, as the estimated deposit density Dd is larger between the first density Dd1 and the second density Dd2, the threshold temperature CTth is made lower proportionally from the first temperature Tth1 to the second temperature Tth2. As the deposit density Dd is higher, the glow plug section 15a has to be caused to have a higher temperature for a longer time. As a result, the ambient temperature in the cylinder becomes high.

If the ambient temperature is high, restart of the engine 10 is possible even if the engine 10 is at a lower temperature. In this regard, in the map shown in Fig. 4, both the deposit density Dd and the threshold temperature CTth are given a correlation so as to increase the threshold temperature CTth in response to increase in the deposit density Dd, and therefore, the threshold temperature CTth can be set more minutely and properly. This expands the automatic stop control enabling region by a region A1 as compared with the case in which the threshold temperature CTth is fixed at the first temperature Tth1.

When the estimated deposit density Dd is larger than the second density Dd2, the threshold temperature CTth is kept at the second temperature Tth1 in the map in Fig. 4. Reduction in the threshold temperature CTth is set to be up to the second temperature Tth1, the situation can be restrained, in which automatic stop control is performed although the engine cooling water temperature or the oil temperature is too low even when the heat generation by energizing the glow-plug-integrated type in-cylinder pressure sensor 15 is added.

When the estimated deposit density Dd is lower than the first density Dd1, the threshold temperature CTth is kept at the first temperature Tth1 Thereby, only when the deposit density Dd is a certain degree or more, the threshold temperature CTth is changed, and automatic stop control is made to be easily executable. Meanwhile, when the deposit density Dd is low, the threshold temperature CTth can be kept at a constant value.

### [Specific Processing in First Embodiment]

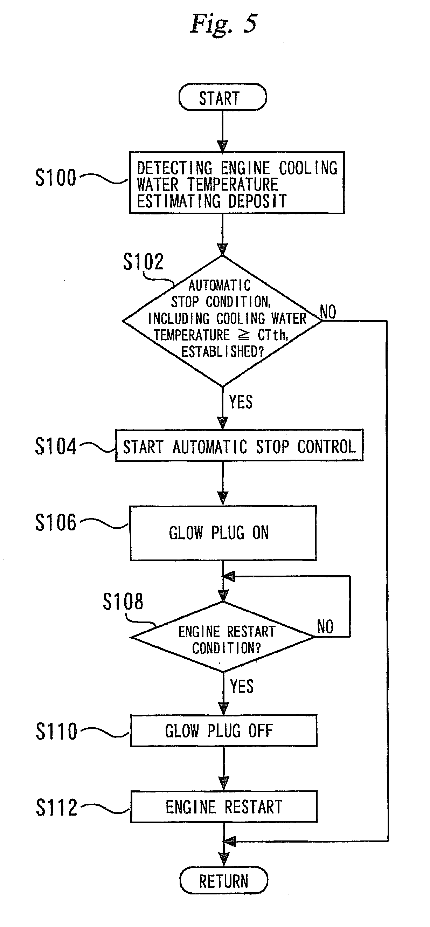

Fig. 5 is a flowchart of a routine executed by the control device of the engine 10 according to the first embodiment of the present invention. In the routine of Fig. 5, the ECU 70 firstly executes the estimation program of the deposit accumulation amount (step S100).

Next, the ECU 70 executes determination processing of determining whether or not the automatic stop conditions are established (step S102). Namely, it is the determination processing of whether or not to perform idling stop in the first embodiment.

The "automatic stop conditions" include at least one of the following: a detection value VSP (vehicle speed (km/h) or an output number of revolutions (rpm) in place thereof) of the vehicle speed sensor 55 is zero; a detection value SHT of the shift position sensor 27 is a signal indicating "a neutral position"; an engine speed NE [rpm] calculated based on the output signal CA of the crank angle sensor 51 is a predetermined speed or less; a detected accelerator opening ACCP (accelerator pedal depression rate) of the accelerator opening sensor 7 is zero; and the like. Further, the automatic stop conditions may be set to be established when such a state is brought about that the accelerator opening is zero and a detection signal BRK of the brake switch 9 is on (a brake operation is present) in a low-speed range of a predetermined vehicle speed or lower, and there is a high possibility of reaching vehicle stop.

In the first embodiment, the automatic stop conditions include whether or not the cooling water temperature of the engine 10 is equal to or higher than the threshold temperature CTth as one of the conditions. Namely, it is determined whether the present operation conditions belong to the automatic stop control prohibition region or the automatic stop control implementation region, based on the deposit accumulation amount estimated in step S100 from the map of Fig. 4 and the present engine cooling water temperature detected by the water temperature sensor 52.

When it is determined that the automatic stop conditions are established in step S102, the ECU 70 starts the automatic stop control processing of the engine 10 (step S104).

Next, the ECU 70 executes processing of starting energization to the glow plug section 15a so as to remove the deposit of the glow-plug-integrated type in-cylinder pressure sensor 15 (step S106). This corresponds to the first energization control described above.

Next, the ECU 70 executes determining processing of determining whether or not automatic restart conditions are established (step S108). Namely. it is determined whether or not to restart the engine 10 by returning the engine 10 from automatic stop in the first embodiment.

The "automatic restart conditions" include at least one of the following: the driver performs a brake pedal depression releasing operation during automatic stop; an operation of depressing the accelerator pedal is performed during automatic stop; an operation to a drive range of the shift lever is performed; and restart requests are generated from the battery charging control system, and the control systems of the on-vehicle devices such as an air-conditioner. The automatic restart conditions can be made the conditions that are also established when the depression amount of the brake pedal in a brake releasing direction, and a change speed (a change amount per unit time) of the master cylinder liquid pressure are less than predetermined determination threshold values.

When it is not determined that the automatic restart conditions are established in step S108, the routine returns to step S108, and glow plug energization during the automatic stop control is continued.

When automatic restart conditions are established in step S108, the glow plug section 15a is turned off (step S110), and further, the engine 10 is restarted (step S112). Thereafter, the routine of this time is ended.

As described above, according to the first embodiment, the threshold temperature is set to be variable in response to the deposit density Dd, and therefore, automatic stop control can be made easily executable by using heat generation by energization of the glow-plug-integrated type in-cylinder pressure sensor 15.

### [Modification of First Embodiment]

While in the first embodiment, idling stop control is performed as the automatic stop control, the present invention is not limited thereto. When various kinds of free run known to the public are performed at the time when predetermined conditions are established as the automatic stop control, the present invention also can be applied. In that case, the control relating to "idling stop" in the flowchart in Fig. 5 can be replaced with control for performing free run. Since early restart is required at a time of free-run traveling, the advantage that is obtained by energization to the glow plug section 15a is huge.

Note that there are broadly three kinds of free run. Three kinds of free run are: free run that idles the engine when the shift of the vehicle is in a neutral position, free run that stops the cylinders of the engine; and free run that stops the engine when the shift of the vehicle is in a neutral position. The present embodiment performs deposit removal by glow plug energization when there is no flow of intake air, and therefore, the present invention can be applied to the free run that involves stop of the engine 10 out of the above described kinds.

In the first embodiment, it is determined whether or not the automatic stop conditions are established with reference to the map in Fig. 4 by using the output signal from the water temperature sensor 52. However, the present invention is not limited thereto. An oil temperature sensor not illustrated that is provided at the engine 10 may replace the water temperature sensor 52, and the output signal from the oil temperature sensor may be plotted in the axis of abscissa of the map of Fig. 4.

Note that in the first embodiment, the deposit accumulation amount is estimated by executing the estimation program. However, the present invention is not limited thereto. Not only the deposit accumulation amount is estimated, but also a parameter having a correlation with the deposit accumulation amount may be detected or estimated. The threshold temperature may be changed based on the parameter that is detected or estimated.

To between step S104 and step S106 described above, a branch step may be added, which performs glow plug energization if the deposit density is a predetermined density Ddg or higher, and does not perform glow plug energization if the deposit density is lower than the predetermined density Ddg. Addition of the branch step realizes the operation of continuing automatic stop until the engine restart conditions are established without turning on the glow plug if the deposit density is lower than the predetermined density Ddg. The predetermined density Ddg is a value equal to the first density Dd1 shown in the map in Fig. 4, or a value smaller than the first density Dd1.

After step S106, deposit removal completion determining processing of determining whether or not deposit removal is completed before establishment of the engine restart conditions in step S108. While the condition of the deposit removal completion determination processing is not established, the glow plug energization is continued. When the condition of the deposit removal completion determining processing is established, at least one of the following controls (1) to (3) is executed.
(1) Restart the engine 10 immediately after turning off glow plug energization.
(2) Turn off glow plug energization, and determine whether or not the cooling water temperature is the threshold temperature CTth corresponding to the deposit amount at the point of time or higher. Determine whether or not the cooling water temperature is the threshold temperature CTth at the time of the deposit amount being zero or higher, when the condition is such that the deposit is completely removed by the deposit removal completion determining processing. It is determined whether or not to continue automatic stop in accordance with the determination result.
(3) Estimate the in-cylinder temperature after turning off the glow plug energization, and restart the engine 10 when the in-cylinder temperature becomes a predetermined temperature or lower.

Note that in the present embodiment, various kinds of controls such as the routine in Fig. 5 are performed by using "the deposit density". However, the present invention is not limited thereto. Various controls such as the routine in Fig. 5 may be performed by using the deposit accumulation amount itself in place of the deposit density. More specifically, while in the first embodiment, the deposit density Dd is plotted in the axis of ordinates in the map in Fig. 4, the deposit accumulation amount itself may be plotted in the axis of ordinates. Further, comparison determination processing using the deposit density may be properly replaced with the comparison determining processing using the deposit accumulation amount.

### Second Embodiment

An internal combustion engine according to a second embodiment is assumed to include the same hardware configuration as that of the engine 10 of the first embodiment. The second embodiment differs from the first embodiment in that the operation conditions of the glow plug section 15a are changed based on the output signal from the SOC controller 38 that detects a charge state of the battery and the deposit density Dd. By properly using the operation conditions of the glow plug section 15a with the battery SOC taken into consideration, a restart failure of the engine 10 by the discharged battery during automatic stop control can be restrained from occurring.

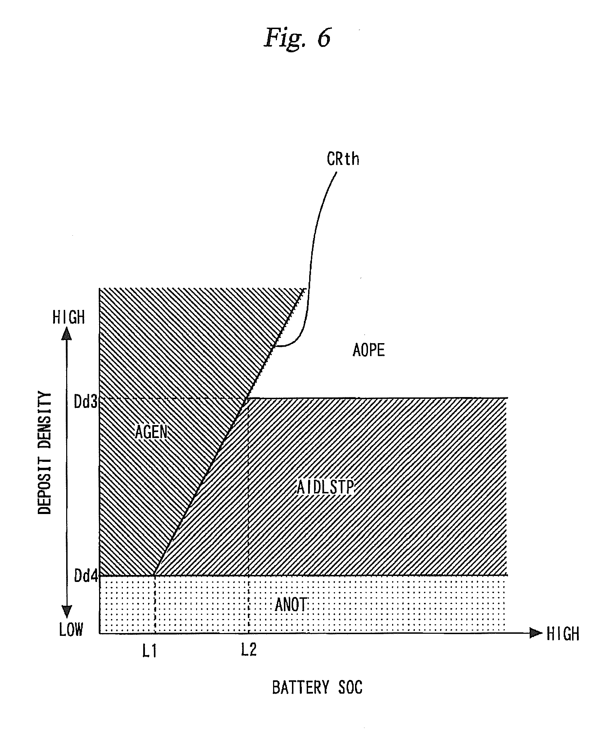

Fig. 6 is a map that is stored by a control device (namely, the ECU 70) of the internal combustion engine according to the second embodiment of the present invention. The map is divided into a region ANOT, a region AGEN, a region AIDLSTP, and a region AOPE, in accordance with the battery SOC and the deposit density.

The ECU 70 switches the conditions to allow first energizing control and second energizing control in accordance with the deposit density Dd and a battery charge state (SOC) detected by the SOC controller 38. In the map shown in Fig. 6, a charge threshold value CRth is set as a comparative value to be compared with the battery SOC.

When the battery SOC is the charge threshold value CRth or less, a situation of the engine 10 is in the region AGEN. In the region AGEN, the glow-plug-integrated type in-cylinder pressure sensor 15 is energized by the first energizing control and second energizing control while power is generated with the power generation mechanism 65.

When the battery SOC is higher than the charge threshold value CRth, and the deposit density Dd is higher than a predetermined density Dd3, the situation of the engine 10 is in the region AOPE. In the region AOPE, the glow plug section 15a is energized by the first energizing control and the second energizing control. Namely, both during automatic stop and during an operation of the engine 10, the glow plug section 15a is energized.

When the battery SOC is higher than the charge threshold value CRth, and the deposit density Dd is equal to or lower than the predetermined density Dd3, the glow plug section 15a is energized by only the first energizing control out of the first energizing control and the second energizing control. Namely, in this case, the second energizing control is not performed.

Note when the deposit density Dd is equal to or lower than a predetermined density Dd4, the situation of the engine 10 is in the region ANOT. In the region ANOT, the deposit density is not high, and therefore, the glow plug section 15a is not energized.

As is described above, in the second embodiment, a plurality of kinds of energization conditions can be properly used in response to the deposit density Dd and the battery SOC. When the deposit density Dd is high, the glow plug section 15a is energized only during automatic stop of the engine 10 but also during an operation of the engine 10, and the deposit can be removed. Further, when the battery charge state (state of charge) is low, the glow plug section 15a can be energized by also using electric power other than that of the battery.

In the map in Fig. 6, the charge threshold value CRth is set at a larger value as the deposit density Dd is higher. More specifically, the charge threshold value CRth is determined so that when the deposit density Dd is the predetermined density Dd4, the charge threshold value CRth becomes a first value L1, and when the deposit density Dd is the predetermined density Dd3 (Dd4<Dd3), the charge threshold value CRth becomes a second value L2 (L1<L2). The charge threshold value CRth is set as a linear function that passes through the two points. As the deposit density Dd is higher, electric power with which the glow plug section 15a has to be energized to remove deposit becomes larger, and therefore, the charge threshold value CRth for determining the battery charge state can be made proper in keeping with the tendency.

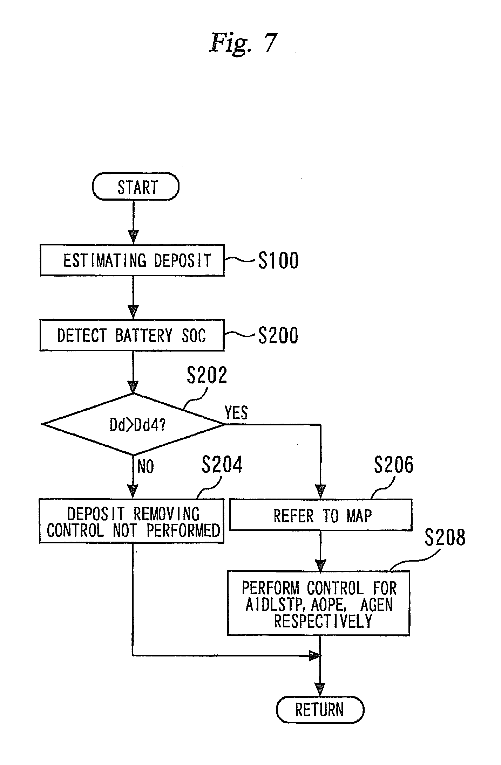

Fig. 7 is a diagram showing a flowchart of a routine executed by the control device for an internal combustion engine according to the second embodiment of the present invention.

In the routine of Fig. 7, the engine cooling water temperature is detected and the deposit accumulation amount is estimated first of all, as in step S100 of Fig. 5.

Next, the ECU 70 executes processing of detecting the battery SOC from the output signal from the SOC controller 38 (step S200).

Next, the ECU 70 executes processing of determining whether or not the deposit density Dd is higher than the predetermined density Dd4 (step S202). When the condition of the step is not established, the situation of the engine 10 belongs to the region ANOT shown in the map in Fig. 6, and therefore, energizing control for deposit removal is not performed (step S204). Thereafter, the routine of this time is ended.

When the condition of step S202 is established, the ECU 70 reads and refers to the map in Fig. 6 from the internal memory (step S206), next. The ECU 70 determines to which region of the regions AGEN, AOPE, and AIDLSTP the situation of the engine 10 at the present point of time corresponds, based on the deposit density Dd obtained in step S100 and the battery SOC detected in step S200.

Thereafter, the ECU 70 implements the first energizing control and the second energizing control respectively in accordance with a control content set to the corresponding region out of the regions AGEN, AOPE and AIDLSTP (step S208). Thereafter, the routine of this time is ended.

### Third Embodiment

An internal combustion engine according to a third embodiment is assumed to include the same hardware configuration as that of the engine 10 of the first embodiment, and the engine 10 is assumed to be loaded on a hybrid vehicle. Since the specific structure and control system of a hybrid vehicle are already known to the public, explanation thereof will be omitted here. Similarly to the system of a hybrid vehicle known to the public, a configuration for charging regenerative electric power that is generated at a time of deceleration of the engine 10 into the battery is also included in the third embodiment.

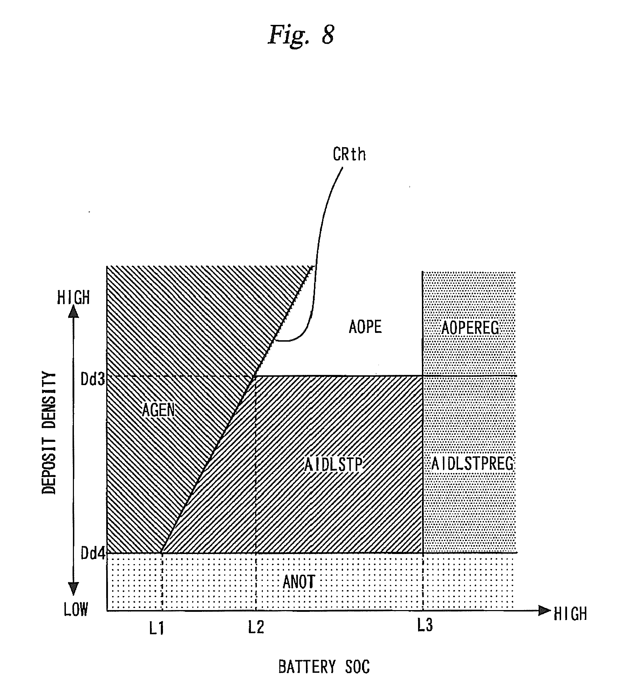

Fig. 8 is a map that is stored by a control device for an internal combustion engine according to the third embodiment of the present invention. In the third embodiment, control using the map in Fig. 8 is performed, in place of the map in Fig. 6. The map in Fig. 8 has a region AOPEREG and a region AIDLSTOPREG further set on the map in Fig. 6. The region AOPEREG and the region AIDLSTOPREG correspond a region in which the battery SOC has a third value L3 (L2<L3) or larger.

In the regions AOPEREG and AIDLSTOPREG, the first energizing control energizes the glow-plug-integrated type in-cylinder pressure sensor 15 by using the regenerative electric power when the battery SOC has the third value L3 or larger. While in the region AOPEREG, the first energizing control and the second energizing control are implemented as in the region AOPE, the regenerative electric power which is generated by deceleration of the hybrid vehicle is supplied to the glow plug section 15a at the time of deceleration of the hybrid vehicle. While in the regions AIDLSTPREG, the first energizing control is implemented and the second energizing control is not implemented as in the region AIDLSTP, the regenerative electric power generated by deceleration of the hybrid vehicle is supplied to the glow plug section 15a at the time of deceleration of the hybrid vehicle.

When the battery SOC is high to a certain degree, the regenerative electric power is not charged into the battery at the time of deceleration. Therefore, in a hybrid vehicle, a step for reducing regenerative electric power and discarding energy to the brake is taken. In this regard, according to the third embodiment, when the battery is sufficiently charged, the regenerative electric power can be effectively used in energization to the glow plug section 15a. From this point of view, the third value L3 is preferably a value indicating a charge state which is so high that the battery is not charged with regenerative electric power. By using regenerative electric power in energization to the glow plug section 15a, the situation in which the regenerative electric power cannot be charged into the battery and is discarded can be prevented.

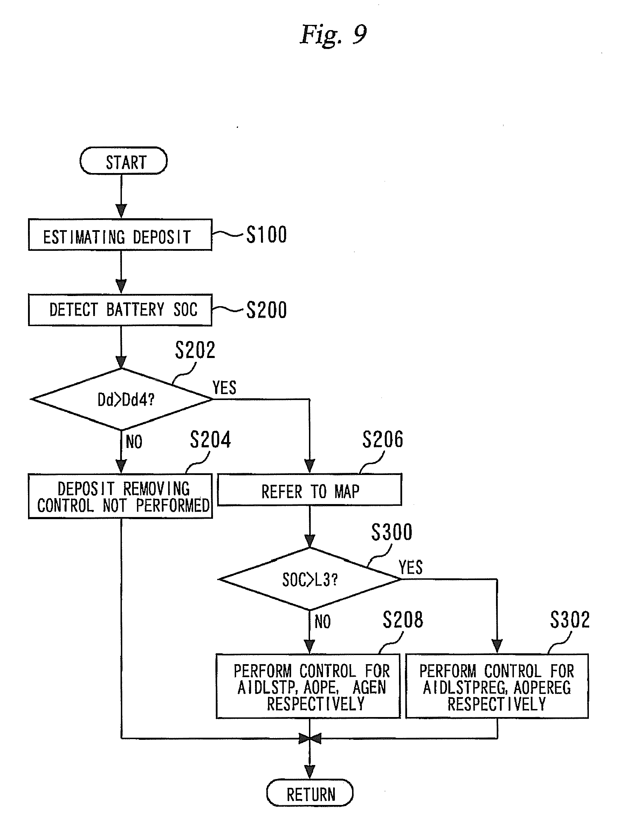

Fig. 9 is a diagram showing a flowchart of a routine that is executed by the control device for an internal combustion engine according to the third embodiment of the present invention. The flowchart in Fig. 9 is the same as the flowchart in Fig. 7 except that steps S300 and S302 are added.

In the flowchart in Fig. 9, the ECU 70 refers to the map in Fig. 8 in step S206, and thereafter, executes processing of determining whether or not the battery SOC is higher than the third value L3, next (step S300).

When the condition of step S300 is established, the ECU 70 executes processing set to the region AIDLSTPREG and the region AOPEREG (step S302). Thereby, the ECU 70 can switch the control content to the mode of performing glow plug energization with regenerative electric power at the time of deceleration of the hybrid vehicle. Thereafter, the routine of this time is ended.

## Claims

1. A control device for an internal combustion engine (10) comprising:
determination means (70) for determining whether or not an automatic stop condition is established, the automatic stop condition including a condition that a cooling water temperature or an oil temperature of the internal combustion engine (10) is equal to or larger than a threshold temperature (CTth);
automatic stop means (70) for executing an automatic stop control that stops the internal combustion engine (10), when it is determined that the automatic stop condition is established;
first energization means (70) for energizing a glow plug (15, 15a) provided with the internal combustion engine (10) so as to remove a deposit of the glow plug (15, 15a) while the internal combustion engine (10) is automatically stopped; and
setting means (70) for setting the threshold temperature (CTth) such that the threshold temperature (CTth) is made lower as a deposit accumulation amount of the glow plug (15, 15a) is greater.

2. The control device according to claim 1, wherein the setting means (70) sets the threshold temperature (CTth) such that the threshold temperature (CTth) is set at a first temperature (Tth1) when the deposit accumulation amount is a first accumulation amount (Dd1), and the threshold temperature (CTth) is set to be a second temperature (Tth2) lower than the first temperature (Tth1) when the deposit accumulation amount is a second accumulation amount (Dd2) that is higher than the first accumulation amount (Dd1), and the threshold temperature (CTth) is made lower from the first temperature (Tth1) to the second temperature (Tth2) as the deposit accumulation amount is larger between the first accumulation amount (Dd1) and the second accumulation amount (Dd2).

3. The control device according to claim 2, wherein the setting means (70) sets the threshold temperature (CTth) such that, when the deposit accumulation amount is larger than the second accumulation amount (Dd2), the threshold temperature (CTth) is kept at the second temperature (Tth2).

4. The control device according to claim 2 or 3, wherein the setting means (70) sets the threshold temperature (CTth) such that, when the deposit accumulation amount is lower than the first accumulation amount (Dd1)" the threshold temperature (CTth) is kept at the first temperature (Tth1).

5. The control device according to any one of claims 1 to 4, further comprising second energization means (70) for energizing the glow plug (15, 15a) so as to remove a deposit of the glow plug (15, 15a) during an operation of the internal combustion engine (10), wherein
the control device removes the deposit of the glow plug (15, 15a) by the first energizing means (70) and the second energizing means (70) when the deposit accumulation amount is a third accumulation amount (Dd3), and
the control device removes the deposit of the glow plug (15, 15a) by the first energizing means (70) and the second energizing means (70) is not used to remove the deposit, when the deposit accumulation amount is a fourth accumulation amount (Dd4) lower than the third accumulation amount (Dd3).

6. The control device according to claim 5, further comprising:
battery detecting means (38) for detecting a charge state of a battery, the battery supplying electric power to starting means (61) of the internal combustion engine (10); and
power generation means (65) for generating electric power by using a drive force of the internal combustion engine (10); wherein
the first energization means (70) energizes the glow plug (15, 15a) with the power generation means (65) generating the electric power when the charge state detected by the battery detecting means (38) is a first state, and
the first energization means (70) energizes the glow plug (15, 15a), when the charge state detected by the battery detecting means (38) is a second state higher than the first state, regardless of whether the power generation means (65) generates the electric power.

7. The control device according to claim 6, wherein a charge threshold value (CRth) is set to be compared with the charge state detected by the battery detecting means (38),
the control device determines the first state when the charge state is equal to or lower than the charge threshold value (CRth), the control device determines the second state when the charge state is higher than the charge threshold value (CRth), and
the charge threshold value (CRth) is set at a larger value as the deposit accumulation amount is higher.

8. The control device according to any one of claims 1 to 4, further comprising:
battery detecting means (38) for detecting a charge state of a battery, the battery supplying electric power to starting means (61) of the internal combustion engine (10);
power generation means (65) for generating electric power by using a drive force of the internal combustion engine (10);
second energization means (70) for energizing the glow plug (15, 15a) so as to remove a deposit of the glow plug (15, 15a) during an operation of the internal combustion engine (10); and
battery control selecting means (70) for setting a condition to allow the first energization means (70) and the second energization means (70) to energize the glow plug (15, 15a) in accordance with the deposit accumulation amount and the charge state detected by the battery detecting means (38); wherein
the battery control selecting means (70) includes a charge threshold value (CRth) to be compared with the charge state detected by the battery detecting means (38),
the battery control selecting means (70) causes the first energization means (70) and the second energization means (70) to energize the glow plug (15, 15a) with the power generation means (65) generating the electric power, when the charge state detected by the battery detecting means (38) is equal to or lower than the charge threshold value (CRth),
the battery control selecting means (70) causes the first energization means (70) and the second energization means (70) to energize the glow plug (15, 15a), when the charge state detected by the battery detecting means (38) is higher than the charge threshold value (CRth) and the deposit accumulation amount is greater than a predetermined accumulation amount, and
the battery control selecting means (70) causes the first energization means (70) only out of the first energization means (70) and the second energization means (70) to energize the glow plug (15, 15a), when the charge state detected by the battery detecting means (38) is higher than the charge threshold value (CRth) and the deposit accumulation amount is equal to or smaller than the predetermined accumulation amount.

9. The control device according to claim 8, wherein the charge charge threshold value (CRth) is made greater as the deposit accumulation amount is greater.

10. The control device according to any one of claims 1 to 9, wherein the internal combustion engine (10) is connected to regeneration means for charging a battery by a regenerative electric power that is generated at a time of deceleration of the internal combustion engine (10),
the control device further comprising battery detecting means (38) for detecting a charge state of a battery, the battery supplying electric power to starting means (61) of the internal combustion engine (10), wherein
the first energization means (70) energizes the glow plug (15, 15a) by using the regenerative electric power of the regeneration means when the charge state is equal to or larger than a predetermined value.

11. The control device according to claim 10, wherein the predetermined value is a high degree of a charge state such an extent that the battery is not charged by the regenerative electric power.

12. The control device according to any one of claims 1 to 11, wherein the glow plug (15, 15a) is integrated with an in-cylinder pressure sensor (15b).

13. The control device according to any one of claims 1 to 12, the control device further comprising estimation means (70) for estimating the deposit accumulation amount of the glow plug (15, 15a).
